**Europäisches Patentamt**

**European Patent Office**

**Office européen des brevets**

(11) Veröffentlichungsnummer: **0 008 815**
A1

(12)

# EUROPÄISCHE PATENTANMELDUNG

(21) Anmeldenummer: **79200401.2**

(22) Anmeldetag: **17.07.79**

(51) Int. Cl.³: **G 03 B 19/18**

(30) Priorität: **26.08.78 DE 2837366**

(43) Veröffentlichungstag der Anmeldung:
**19.03.80 Patentblatt 80/6**

(84) Benannte Vertragsstaaten:
**AT CH FR**

(71) Anmelder: **Braun Aktiengesellschaft**
**Rüsselsheimer Strasse 22**
**D-6000 Frankfurt/Main(DE)**

(72) Erfinder: **Roth, Johann**
**Münchnerstrasse 38**
**D-8061 Schwabhausen(DE)**

(72) Erfinder: **Roppel, Alfred**
**Schöngeisingerstrasse 13**
**D-8000 München 60(DE)**

(74) Vertreter: **Einsele, Rolf**
**Braun Aktiengesellschaft Postfach 1120**
**D-6242 Kronberg/Taunus(DE)**

(54) Vorrichtung zum Bereitstellen einer begrenzten Filmlänge für den Rücktransport bei Überblendaufnahmen in Laufbildkameras.

(57) Bei einer Vorrichtung zum Bereitstellen einer begrenzten Filmlänge für den Rücktransport bei Überblendaufnahmen in Laufbildkameras, deren vom Kameramotor angetriebener Filmaufwickeldorn (1) durch eine Rücklaufsperre für die Aufwickelspule beaufschlagt ist, welche ein Drehen des Dorns in der für den Rücktransport des Films erforderlichen Richtung verhindert, ist der in an sich bekannter Weise über eine Friktion angetriebene Filmaufwickeldorn (1) während des erstmaligen Vorwärtstransports und vorzugsweise auch während des anschließenden Rücktransports des zu überblendenden Filmabschnitts mittels eines elektrisch gesteuerten Sperrgliedes (2, 3) stillsetzbar.

Vorrichtung zum Bereitstellen einer begrenzten Filmlänge für den Rücktransport bei Überblendaufnahmen in Laufbildkameras

Die Erfindung betrifft eine Vorrichtung zum Bereitstellen einer begrenzten Filmlänge für den Rücktransport bei Überblendaufnahmen in Laufbildkameras, deren vom Kameramotor angetriebener Filmwickeldorn durch eine Rücklaufsperre für die Aufwickelspule beaufschlagt ist, welche ein Drehen des Dorns in der für den Rücktransport des Films erforderlichen Richtung verhindert.

Eine solche Vorrichtung ist erforderlich bei Laufbildkameras, die mit einer Filmkassette bestückt werden, deren Filmaufwickelspule von einer Rückwickelsperre beschlagen wird, um ein Aufschnurren des aufgespulten Filmwickels zu verhindern. Diese Rückwickelsperre verhindert bekanntlich das Überblenden zweier Filmszenen, da sie es nicht gestattet, den erstmalig aufgespulten, mit der abgeblendeten Filmszene belichteten Filmabschnitt wieder von der Filmaufwickelspule für das zweimalige Belichten mit der aufzublendenden Filmszene abzuziehen.

Zu diesem Zweck hat man die Drehung der Aufwickelspule durch Stillsetzen des sie antreibenden Aufwickeldorns vollkommen gesperrt, damit man den zu überblendenden Filmabschnitt lose in die Kassette einspeichern und nach der erstmaligen Belichtung desselben wieder aus der Kassette herausziehen kann (DE-PS 19 58 682).

Aufgabe der vorliegenden Erfindung ist es nun, eine besonders einfach aufgebaute und möglichst universell einsetzbare, mit den unterschiedlichsten Steuermitteln funktionsgerecht zusammenwirkende Vor-

000881

richtung zu schaffen, mit der sich eine begrenzte Filmlänge, also ein Filmabschnitt für die Überblendung bereitstellen läßt.

Dies wird mit der eingangs definierten Vorrichtung dadurch erreicht, daß der in an sich bekannter Weise über eine Friktion angetriebene Filmaufwickeldorn während des erstmaligen Vorwärtstransports und vorzugsweise auch während des anschließenden Rücktransports des zu überblendenden Filmabschnitts mittels eines elektrisch gesteuerten Sperrgliedes stillsetzbar ist. Das Sperrglied für den Filmaufwickeldorn kann dabei thermoelektrisch gesteuert werden. Es kann beispielsweise aus einem Bimetallstreifen bestehen, der vorzugsweise während der Abblend- und der Rückspulphase mit Strom versorgt wird und dabei in seine Sperrstellung gelangt.

Im Hinblick auf eine bei Kameras stets erwünschte Stromersparnis ist es von besonderem Vorteil, wenn das den Filmaufwickeldorn stillsetzende Sperrglied aus dem Anker eines Elektromagneten gebildet ist, der während des Einschaltens einer der Laufbildkamera zugehörigen Überblendeinrichtung, insbesondere während der Abblend- und der Rückspulphase erregbar ist und dabei seinen Anker mit einem auf dem Filmaufwickeldorn sitzenden oder mit diesem drehenden Sperrglied in Eingriff bringt.

Das mit dem Filmaufwickeldorn drehende Sperrglied ist vorteilhaft ein Sperrad, in das der Anker des vorzugsweise während der Abblend- und der Rückspulphase erregten Elektromagneten sperrend einfällt.

Zur weiteren Stromersparnis infolge entsprechender Dimensionierung des die Sperrwirkung erzeugenden Elektromagneten ist es vorteilhaft, den Anker dieses vorzugsweise während der Abblend- und der Rückspulphase erregten Elektromagneten mit einer in seiner Hubrichtung verlaufenden Sperrnase zu versehen, mit der er in die Lücke zwischen den Sperrzähnen des Sperrades selbsthemmend einfällt.

Das mit dem Anker des Elektromagneten zusammenwirkende Sperrad weist nach einem weiteren Merkmal der Erfindung im entsprechenden Sinne wirkende Mittel auf, die jeweils zwischen den Sperrzähnen des Sperrades angeordnet sind.

0008815

Damit ist die Gewähr gegeben, daß das betreffende Sperrglied mit Sicherheit wieder in seine Entsperrstellung gelangt und somit die Laufbildkamera wieder für eine störungsfreie Reihenbildaufnahme vorbereitet ist.

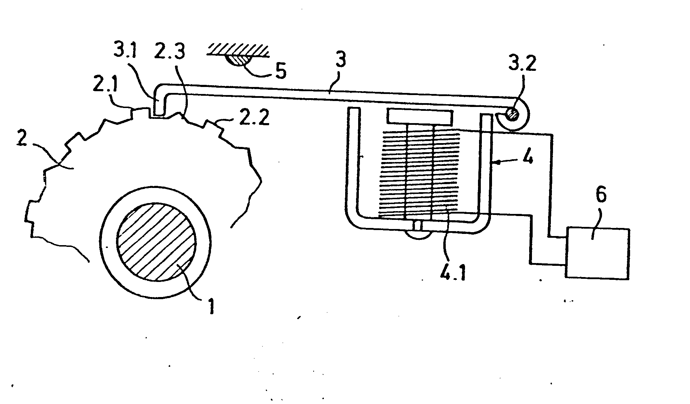

Die Vorrichtung gemäß der Erfindung ist anhand der Zeichnung in einem Ausführungsbeispiel näher erläutert.

Auf dem mit dem kameraseitigen Antrieb über eine Rutschkupplung verbundenen Aufwickelsorn 1 bzw. auf dessen Antriebswelle sitzt fest ein Sperrad 2, das mit dem bei 3.2 gelagerten Anker 3 eines Elektromagneten 4 zusammenwirkt. Der Aufwickeldorn 1 dient hierbei - wie ansich bekannt - der Kupplung des kameraseitigen Antriebs mit der üblicherweise in einer Kassette befindlichen Filmaufwickelspule, da innerhalb der Kassette von einer das Aufschnurren des Filmwickels verhindernden Rücklaufsperre beaufschlagt ist.

Um nun diese Aufwickelspule während der Abblendphase und aus Sicherheitsgründen auch während der Rückspulphase gegen jegliche Drehung zu sperren und damit ein lockeres Einspeichern des zu überblendenden Filmabschnittes in die Kassette zu ermöglichen, greift der vom Elektromagneten 4 angezogene Anker 3 mit seiner Nase 3.1 in das Sperrad 2 ein. Dabei liegt die Nase 3.1 an einem der Sperrzähne 2.1 an, so daß der Aufwickeldorn 1 an einer Drehung im Uhrzeigersinn gehindert ist. Gegen Drehung entgegen dem Uhrzeigersinn wird der Aufwickeldorn 1 durch den Sperrzahn 2.2 gehindert.

Ist der Abblend- und der Rückspulvorgang beendet, so wird der Elektromagnet 4 enterregt, wodurch sein Anker 3 unter Einwirkung einer Speicherkraft und - bei vorhandener Remanenz - zusätzlich unterstützt durch einen der Hubzähne 2.3 aus dem Eingriff mit dem Sperrzahn gehoben wird, wonach er zur Anlage an einen gerätefesten Anschlag 5 kommt und damit in seine Entsperrstellung gelangt ist.

Die Erregerwicklung 4.1 des Magneten 4 kann vom Steuerorgan der kameraseitigen Überblendeinrichtung, wie sie beispielsweise in der DE-PS 19 58 682 offenbart ist, funktionsgerecht mit Strom versorgt werden. Sie kann jedoch auch Teil einer kameraseitigen elektronischen Überblendungsautomatik sein. Ebenso kann sie von einem vorzugsweise elektronisch arbeitenden Zähler der Kamera angesteuert werden.

In jedem Fall benötigt der Elektromagnet 4 wenig Strom zum Überführen des Ankers 3 in seine Sperrstellung, da die Belastung der in das Sperrad 2 eingreifenden Ankernase 3.1 quer zur Anzugsrichtung des Ankers 3 verläuft.

Im Interesse einer besonders wirksamen Stromersparnis kann die Steuerung und Ausbildung des sperrenden und entsperrenden Elektromagneten so getroffen sein, daß sein Anker zu Beginn der Abblendphase in die Entsperrstellung elektromagnetisch gebracht wird, wobei lediglich zum Vorbringen des Sperrankers in seine beiden Endstellungen die dann in zwei entgegengesetzten Richtungen wirkenden Erregerwicklungen des Sperrmagneten kurzzeitig mit Strom versorgt werden müssen.

Patentansprüche

1. Vorrichtung zum Bereitstellen einer begrenzten Filmlänge für den Rücktransport bei Überblendaufnahmen in Laufbildkameras, deren vom Kameramotor angetriebener Filmaufwickeldorn durch eine Rücklaufsperre für die Aufwickelspule beaufschlagt ist, welche ein Drehen des Dorns in der für den Rücktransport des Films erforderlichen Richtung verhindert, dadurch gekennzeichnet, daß der in an sich bekannter Weise über eine Friktion angetriebener Filmaufwickeldorn während des erstmaligen Vorwärtstransports und vorzugsweise auch während des anschließenden Rücktransports des zu überblendenden Filmabschnitts mittels eines elektrisch gesteuerten Sperrgliedes stillsetzbar ist.

2. Vorrichtung nach Anspruch 1, dadurch gekennzeichnet, daß das den Filmaufwickeldorn stillsetzende Sperrglied aus dem Anker (3) eines Elektromagneten (4) gebildet ist, der während des Einschaltens einer der Laufbildkamera zugehörigen Überblendeinrichtung, insbesondere während der Abblend- und der Rückspulphase erregbar ist und dabei seinen Anker (3) mit einem auf dem Filmaufwickeldorn (1) sitzenden oder mit diesem drehenden Sperrglied (2) in Eingriff bringt.

3. Vorrichtung nach Anspruch 1 oder 2, dadurch gekennzeichnet, daß das mit dem Filmaufwickeldorn (1) drehende Sperrglied ein Sperrad (2) ist, in das der Anker (3) des vorzugsweise während der Abblend- und der Rückspulphase erregten Elektromagneten (4) sperrend einfällt.

4. Vorrichtung nach Anspruch 3, dadurch gekennzeichnet, daß der Anker (3) des vorzugsweise während der Abblend- und der Rückspulphase erregten Elektromagneten (4) eine in seiner Hubrichtung verlaufende Sperrnase (3.1) hat, mit der er in die Lücke zwischen den Sperrzähnen (2.1 und 2.2) des Sperrads (2) selbsthemmend einfällt.

5. Vorrichtung nach wenigstens einem der Ansprüche 1 bis 4, dadurch gekennzeichnet, daß das mit dem Anker (3) des Elektromagneten (4) zusammenwirkende Sperrad (2) im entsprechenden Sinne wirkende Mittel aufweist, die jeweils den Sperrzähnen (2.1 und 2.2) des Sperrades angeordnet sind.

-6-

0008815

6. Vorrichtung nach Anspruch 5, dadurch gekennzeichnet, daß die im entsperrenden Sinne wirkenden Mittel des Sperrades (2) dachförmig ausgebildeten Zähne (2.3) sind, die den Anker (3) des Elektromagneten (4) aus dem Eingriff mit dem Sperrad haben.

7. Vorrichtung nach wenigstens einem der Ansprüche 1 bis 6, dadurch gekennzeichnet, daß der den Sperranker (3) umfassende Elektromagnet (4) von einem vom Steuerorgan der kameraseitigen Überblendungseinrichtung betätigten Steuerglied funktionsgerecht mit Strom versorgt wird.

8. Vorrichtung nach wenigstens einem der Ansprüche 1 bis 6, dadurch gekennzeichnet, daß der den Sperranker (3) umfassende Elektromagnet (4) von einer elektronisch arbeitenden Überblendungsautomatik (6) der Kamera funktionsgerecht angesteuert wird.

1/1

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | CH – A5 – 591 708 (BOLEX INTERNATIONAL) <br> * Spalte 6, Zeilen 1 bis 29; Fig. 4 * <br> –– | 1 |
| D | DE – C – 1 958 682 (NIEZOLDI & KRÄMER) <br> * Fig. 1, Positionen 1.4, 23, 20, 21 * <br> –– | 1,2 |
| A | DE – A – 2 123 811 (CANON) <br> * Seite 7, letzter Abschnitt; Fig. 10, 12, 13 * <br> –– | 1,2 |
| A | DE – B – 1 286 894 (BOSCH) <br> * Ansprüche 1 bis 3; Fig. 1 * <br> –– | |
| A | DE – A1 – 2 335 200 (BRAUN) <br> * Fig. 1 bis 3 * <br> ———— | |

**KLASSIFIKATION DER ANMELDUNG (Int.Cl.3)**

G 03 B 19/18

**RECHERCHIERTE SACHGEBIETE (Int. Cl.3)**

G 03 B 15/08
G 03 B 19/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde
   liegende Theorien oder
   Grundsätze
E: kollidierende Anmeldung
D: in der Anmeldung angeführtes
   Dokument
L: aus andern Gründen
   angeführtes Dokument
&: Mitglied der gleichen Patent-
   familie, übereinstimmendes
   Dokument

X Der vorliegende Recherchenbericht wurde für alle Patentansprüche erstellt.

| Recherchenort | Abschlußdatum der Recherche | Prüfer |
|---|---|---|
| Berlin | 23-11-1979 | HOPPE |